**Europäisches Patentamt**

**European Patent Office**

**Office européen des brevets**

(19)

(11) Publication number : **0 389 212 B1**

(12) # EUROPEAN PATENT SPECIFICATION

(45) Date of publication of patent specification :
**16.06.93 Bulletin 93/24**

(51) Int. Cl.⁵ : **C09J 7/04, C09J 7/02**

(21) Application number : **90302910.6**

(22) Date of filing : **19.03.90**

(54) **Novel Adhesive Tapes.**

(30) Priority : **20.03.89 US 325822**

(43) Date of publication of application :
**26.09.90 Bulletin 90/39**

(45) Publication of the grant of the patent :
**16.06.93 Bulletin 93/24**

(84) Designated Contracting States :
**BE DE ES FR GB IT NL SE**

(56) References cited :
**EP-A- 0 336 727**
**CH-A- 564 078**
**DE-B- 1 594 097**
**US-A- 4 097 649**
**US-A- 4 209 565**

(73) Proprietor : **THE KENDALL COMPANY**
**15 Hampshire Street**
**Mansfield, Massachusetts 02048 (US)**

(72) Inventor : **Mamish, Abboud L.**
**6 Tamarack Road**
**Natick, Massachusetts 01760 (US)**

(74) Representative : **Kearney, Kevin David Nicholas et al**
**KILBURN & STRODE 30 John Street**
**London, WC1N 2DD (GB)**

EP 0 389 212 B1

Jouve, 18, rue Saint-Denis, 75001 PARIS

## Description

Industrial tapes utilizing a cloth material for additional strength are well known in the art. Where generally even tearing in the crossdirection is desired, i.e. tapes that are referred to in the art as being "finger-tearable", a woven cloth material is employed, since nonwovens as a class are characterized as possessing poor crossidrectional tear characteristics.

Yet, from the standpoint of cost-effectiveness, it remains desirable to provide industrial tapes which are substantially evenly tearable in the crossidirection utilizing nonwovens for additional strength in lieu of wovens.

A primary object of this invention is to provide cost-effective finger-tearable industrial tapes employing nonwoven cloths, which tapes find particular utility in the automotive industry.

Other objects of the invention will be apparent from the following detailed description.

In accordance with this invention, the aforementioned objective is accomplished by providing a pressure-sensitive adhesive tape comprising:

(1) a lightweight nonwoven synthetic cloth;

(2) a polymeric backing layer from 3 to 5 mils (0.075 to 0.13 mm) thick bonded to one surface of the cloth with additional amounts of the polymeric material at least partially filling the interstices of the cloth, at least the outer surface of the backing layer comprising a polyolefinic material; and

(3) a layer at least 1.0 mils (0.025 mm) e.g. at least 1.5 mils (0.038 mm) thick of a pressure-sensitive adhesive material bonded to the opposed surface of the cloth with a portion of the adhesive material on the inner surface of the adhesive layer being laminated to polymeric material of the said backing layer within the interstices of the cloth, thereby forming a unitary laminar structure in which the nonwoven cloth is characterized as being sandwiched between the polymeric backing material on one surface thereof and the adhesive material on the opposed surface thereof.

As was previously mentioned, the present invention is directed to an industrial tape wherein a nonwoven cloth material is sandwiched between a polymeric backing layer on one side and a pressure-sensitive adhesive layer on the other, at least the outer surface of the backing layer comprising a polyolefinic material. The nonwoven cloth is not present as a discrete layer. Rather, the backing layer material both coats and invades the interstices of the cloth, so that the cloth may be said to be "embedded" in the backing layer material as well as being chemically bonded or laminated thereto. The adhesive layer on the opposed surface is also chemically bonded to the cloth with a portion of the adhesive material being laminated to the polymeric material within the interstices of the cloth to provide a unitary laminar structure. The polymeric material coating and filling the interstices of the cloth restricts the movement of the nonwoven fibers so that they will tear substantially evenly only in the direction where the tearing force is exerted. Thus, although a nonwoven by definition is oriented in all directions, if the tearing force is exerted in the crossdirection, it will tear substantially evenly in this direction.

At least the outer surface of the backing layer comprises a polyolefinic material. The entire backing layer may comprise a polyolefinic material.

Alternatively, if found desirable or expedient to do so, the backing layer(s) may be a multi-layered structure with the outer layer being laminated to the cloth through an intermediate tiecoat layer.

In either instance, the backing layer may be described as being multi-functional in the sense that it acts as a sealant to the discontinuous nonwoven surface; serves as a barrier against adhesive migration; provides ease of unwind from a roll of the tape, thereby eliminating the need for a release agent treatment; and, moreover, acts as a reinforcement to the nonwoven cloth which initially is characterized as possessing poor crossidrectional tear characteristics and tensile strength.

In theory, any of the polyolefinic materials heretofore employed in the art as backing layers for adhesive tapes may be employed in the practice of this invention. As examples of such materials, mention may be made of the polyethylenes, e.g. low density (LDPE), high density (HDPE), very low or ultra low density (VLDPE), and linear low density (LLDPE) polyethylene. Other useful polyolefins which may be used alone or in combination, e.g. with polyethylene, include ethylene vinyl acetate copolymers, ethylene propylene rubber, EPDM, polypropylene, polyvinyl chloride, polyisobutylene, conjugated diene butyl, etc.

The backing layer may be what is termed as two-layer polyolefinic backing consisting essentially of an outer layer of HDPE and an inner layer of LDPE. In such an embodiment, the two-layer backing may be formed by coextrusion coating it onto the nonwoven cloth. The ratio of thickness of the HDPE and LDPE in this two-layer backing will preferably be on the order of from about 7:8 to about 8:1.

An important aspect of this embodiment of the invention is the improved tensile strength obtainable by employing the two-layer HDPE/LDPE backing layer over LDPE alone. While LDPE is more cost-effective and conformable than HDPE, replacing some of the thickness of the backing layer with HDPE has been found to provide the requisite tensile strength for the contemplated masking tape which is not obtainable by employing LDPE alone.

Where a tie coat is employed as the inner stratum of the backing layer to increase adhesion, any of the per se known materials providing a good chemical bond to both the polyolefinic backing material on one surface and the cloth/adhesive substrate on the other may be employed. Accordingly, the selection of the particular tie coat to be used is well within the expected judgement of the skilled worker and the selection per se comprisese no part of this invention.

By way of illustration, the tie coat may comprise a polyethylene copolymer such as ethylene methyl acrylate (EMA), ethylene vinyl acetate, ethylene acrylic acid, etc., EMA being preferred. In any event, if a tie coat is employed, it should be a thin layer, preferably of 0.25 to 1.0 mils (0.0064 to 0.025 mm) thick.

The nonwoven cloth to be employed will preferably be any of the synthetic nonwovens theretofore known in the art. Suitable synthetic fibers include the rayon, polyesters, polyamides, acrylics, etc. As is known, the fibers may first be carded to orient them primarily in the machine direction. The carded fibers may then be subjected to scrambling, after which they may be chemically or thermally bonded, or hydroentangled to produce the nonwoven fabric, all in per se known manner in the art.

Preferably, however, the nonwoven will be chemically bonded, i.e. the fiber web will be contracted with one or more of the known bonding agents in known manner such as by impregnation, printing, etc. Useful binders for this purpose include acrylics, vinyl acrylics, acetate/ethylene, polyvinyl acetate, polyesters, etc.

The adhesives employed to prepare the novel masking tapes of this invention may be any of those heretofore employed in the art for preparing masking tapes, the selection of which per se comprises no part of this invention. It may, for example, be any of the per se known and commercially available rubber-based oracrylic pressure sensitive adhesives. The list of useful adhesives will include those known in the art as "hotmelt" adhesives, which adhesives are characterized asbeing nonvolatile adhesives made of synthetic resins and plasticizers and applied to the backing hot in the molten state. As those skilled in the art will appreciate, the adhesive should be sufficiently aggressive to adhere well to the contemplated substrates, e.g. glass, metal, plastic, etc., but should also be characterized as having good unwind from the adhesive tape roll and no discernible adhesion stick after removal.

By way of illustration, suitable adhesives of this general description include rubbery block copolymers containing a polyisoprene midblock such as are disclosed in U.S.P. 4,699,941 or the hotmelt adhesives disclosed, for example, in U.S. Patent Nos. 4,623,698; 4,636,555; 4,669,163; 4,698,242; 4,698,405 or 4,717,749.

In any event, the selected adhesive will be applied in a layer at least 1.0 mils (0.025 mm) thick.

The manner of applying the adhesive to the nonwoven cloth also is not critical to the practice of this invention. Preferably, it is applied by using a hot melt applicator. However, other modes of application such as solvent coating, extrusion coating, and the like may also be employed.

In like manner, the method of applying the backing layer to the cloth is not critical. However, extrusion coating is preferred. When the backing layer is composed of two or more strate, as previously discussed, a particular efficacious way of doing so is by coextrusion utilizing per se known coextrusion techniques.

In general, such known coextrusion techniques employ two or more extruders, each delivering a single component polymer melt (in this case HDPE/LDPE) to a combining feedblock which streamlines, combines and feeds the polymers to a single- or multimanifold coat hanger die which in turn feeds the two-layered film into a roll/nip where the cloth web is fed simultaneously at that point to form the backing layer/nonwoven laminate. Standard single screw extruders may be employed to melt and pump the individual layers into the coextrusion feedblock or die, as the case may be. High extrusion temperature profiles, e.g. 500-600°F (260-316°C), are advisable in this stage as well as in the feedblock and die stages. These high temperatures will improve the bonding mechanism of the coextruded layers to the cloth.

Preferably, the feed pipes connecting the extruders to the feedblock should be kept to the shortest length possible to avoid long residence time which may result in polymer degradation as well as high pressure drop that could cause melt surges.

The dies employed in the extrusion coating applications typically consist of a single- or multimanifold coat hanger design with a tear drop cross section and narrow land length. This design facilitates better control over the thin film thicknesses through gradual and continuous build up of head pressure.

Since the coextrusion techniques, as described briefly above, are well known in the art, such details as barrel and die temperatures, screwspeeds and the like will be well understood and a further detailed description is not necessary for a clear understanding of the invention.

The invention may be putinto practice in various ways and a number of specific embodiments will be described to illustrate the invention with reference to the accompanying examples.

## EXAMPLE 1

A mixture of 95% LDPE and 5% of a 50/50 blend of a color pigment and LDPE (total contents: 97.5% by weight LDPE and 2.5% by weight pigment); and a mixture of 95% HDPE and 5% of a 50/50 blend of color pigment and HDPE (total contents 97.5% HDPE and 2.5% pigment) are coextruded onto a rayon/polyester blend nonwoven cloth weighing 17 grams per square yard (14.2 grams/sq. metre) to provide a two-layer backing wherein the outer layer was a 2.5 mil (0.064 mm) thick HDPE layer and the inner layer bonded to the cloth was a 1.4 mil (0.036 mm) LDPE layer. The processing conditions for the extrusion coating are as follows:

|  | Extruder 1 | Extruder 2 |
|---|---|---|
| Temp., barrel zone 1 | 350°F (177°C) | 350°F |
| Temp., barrel zone 2 | 450°F (232°C) | 450°F |
| Temp., barrel zones 3, 4, 5 | 550°F (288°C) | 550°F |
| Temp., Adapter | 550°F (288°C) | 550°F |
| Temp., Die zones 1-5 | 550°F (288°C) | 550°F |
| Melt temp. | 550°F (288°C) | 550°F |
| RPM | 87 | 51 |
| Head Pressure (psi) | 1100 | 1200 |
| Output (psi) | 87 | 255 |
| Line speed (ft/min) | 225 (69 m/min) | – |
| Nip roll pressure (psi) | 40 | – |

A styrene/isoprene block copolymer hot melt pressure sensitive adhesive (pale yellow color; softening point (Ring & Ball), 223-233°F (106-112°C); application temperature, 300-330°F (149-166°C); specific gravity, 0.93-0.97; solids content, 100%) is then applied to the opposed surface of the cloth by slot die coating using a hot melt applicator at a temperature of about 300°F (149°C) to provide an adhesive coating weighing about 40 grams per square yard (33.5 grams/m$^2$), the coating being about two mils (0.051 mm) thick.

## EXAMPLE 2

A mixture of 95% LDPE and 5% of a 50/50 blend of pigment and LDPE is extruded onto the nonwoven cloth as described in Example 1 to provide a backing of LDPE approximately 4 mils (0.10 mm) thick. A rubber-based adhesive is then calendered onto the opposite surface to provide an adhesive layer approximately 2.5 mils (0.064 mm) thick.

## EXAMPLE 3

Example 2 is repeated, except that the LDPE and EMA are coextruded to provide an EMA tiecoat layer approximately 0.50 mils (0.013 mm) thick and an outer LDPE layer approximately 3.75 mils (0.095 mm) thick.

**Claims**

1. A cloth pressure-sensitive adhesive tape characterized as being tearable with the fingers substantially evenly in the cross direction, the said tape comprising:
   (1) a light weight nonwoven synthetic cloth;
   (2) a polymeric backing layer from 3 to 5 mils (0.075 to 0.13 mm) thick bonded to one surface of the said cloth with additional amounts of the said polymeric backing material at least partially filling the voids or interstices within the said cloth, at least the free outer surface of the said backing layer comprising a polyolefinic material; and
   (3) a layer of a pressure-sensitive adhesive material at least 1.0 mil (0.025 mm) thick bonded to the opposed surface of the said cloth with a portion of the adhesive material on the inner surface of the adhesive layer laminated to the polymeric laterial of the said backing layer within the interstices of the said cloth, thereby forming a unitary laminar structure in which the nonwoven cloth is characterized as being sandwiched between the respective polymeric backing layer and adhesive layer materials.

2. A cloth tape as claimed in Claim 1 characterized in that the said backing layer consists essentially of a polyolefinic material.

3. A cloth tape as claimed in Claim 1 or Claim 2 characterized in that the said olefinic material is low density polyethylene.

4. A cloth tape as claimed in Claim 1, 2 or 3 characterized in that the said backing layer is multistrata, the innermost stratum comprising a tiecoat.

5. A cloth tape as claimed in Claim 4 characterized in that the said tiecoat comprises an ethylene methyl acrylate copolymer.

6. A cloth tape as claimed in any one of Claims 1 to 5 characterized in that the said outer surface of said backing layer consists essentially of low density polyethylene.

## Patentansprüche

1. Selbstklebendes Stoffklebeband, dadurch gekennzeichnet, daß es im wesentlichen gleichmäßig in Querrichtung mit den Fingern reißbar ist, wobei das Band
   (1) einen leichtgewichtigen synthetischen Vliestoff;
   (2) eine polymere Stützschicht von 3 bis 5 mils (0,075 bis 0,13 mm) Dicke, die an eine Oberfläche des Stoffes gebunden ist, wobei zusätzliche Mengen des polymeren Stützmaterials mindestens teilweise die Hohlräume oder Zwischenräume innerhalb des Stoffes ausfüllen und mindestens die freie Außenseite der Stützschicht ein Polyolefinmaterial umfaßt, und
   (3) eine Schicht aus einem selbstklebenden Klebstoffmaterial von mindestens 1,0 mil (0,025 mm) Dicke umfaßt, die an die gegenüberliegende Oberfläche des Stoffes gebunden ist, wobei ein Teil des Klebstoffmaterials an der Innenseite der Klebstoffschicht an das Polymermaterial der Stützschicht innerhalb der Zwischenräume des Stoffes laminiert ist, wodurch eine einheitliche Laminarstruktur gebildet wird, in der der Vliesstoff dadurch gekennzeichnet ist, daß er sandwichartig zwischen der entsprechenden polymeren Stützschicht und den Klebeschichtmaterialien eingeschlossen ist.

2. Stoffband nach Anspruch 1, dadurch gekennzeichnet, daß die Stützschicht im wesentlichen aus Polyolefinmaterial besteht.

3. Stoffband nach Anspruch 1 oder 2, dadurch gekennzeichnet, daß das Olefinmaterial Polyethylen mit niedriger Dichte ist.

4. Stoffband nach Anspruch 1, 2 oder 3, dadurch gekennzeichnet, daß die Stützschicht mehrschichtig ist, wobei die am weitesten innenliegende Schicht eine Verbindungsbeschichtung umfaßt.

5. Stoffband nach Anspruch 4, dadurch gekennzeichnet, daß die Verbindungsbeschichtung ein Ethylen-Methylacrylat-Copolymer umfaßt.

6. Stoffband nach einem der Ansprüche 1 bis 5, dadurch gekennzeichnet, daß die äußere Oberfläche der Stützschicht im wesentlichen aus Polyethylen mit niedriger Dichte besteht.

## Revendications

1. Ruban adhésif sensible à la pression, à base de tissu, caractérisé en ce qu'il peut être déchiré avec les doigts sensiblement régulièrement en direction transversale, le ruban en question comprenant :
   (1) un tissu synthétique, non tissé, de faible poids,
   (2) une couche de support polymérique d'une épaisseur de 3 à 5 mils (0,075 à 0,13 mm), liée à une surface du tissu précité, des proportions supplémentaires de ladite matière de support polymérique remplissant au moins partiellement les vides ou interstices dans le tissu précité et au moins la surface externe libre de ladite couche de support comprenant une matière polyoléfinique et

(3) une couche de matière adhésive, sensible à la pression, d'une épaisseur d'au moins 1,0 mil (0,025 mm), liée à la surface opposée du tissu précité, une partie de la matière adhésive sur la surface interne de la matière adhésive étant stratifiée à la matière polymérique de ladite couche de support dans les interstices du tissu précité, de manière à former une structure stratifiée ou lamifiée unitaire dans laquelle le tissu non tissé est caractérisé comme étant pris en sandwich entre la couche de support polymérique et les matières de la couche adhésive respectives.

2. Ruban à base de tissu suivant la revendication 1, caractérisé en ce que la couche de support précitée est essentiellement constituée d'une matière polyoléfinique.

3. Ruban à base de tissu suivant la revendication 1 ou la revendication 2, caractérisé en ce que ladite matière oléfinique est du polyéthylène basse densité.

4. Ruban à base de tissu suivant la revendication 1, 2 ou 3, caractérisé en ce que la couche de support précitée est multicouche, la couche la plus à l'intérieur constituant une couche de liaison.

5. Ruban à base de tissu suivant la revendication 4, caractérisé en ce que ladite couche de liaison est constituée par un copolymère d'éthylène et d'acrylate de méthyle.

6. Ruban à base de tissu suivant l'une quelconque des revendications 1 à 5, caractérisé en ce que ladite surface externe de la couche de support précitée est essentiellement constituée de polyéthylène basse densité.